# EUROPÄISCHE PATENTSCHRIFT

(11) **EP 1 623 066 B1**
(45) Veröffentlichungstag und Bekanntmachung des Hinweises auf die Patenterteilung: **08.08.2018**
(21) Anmeldenummer: 04728578.8
(22) Anmeldetag: 21.04.2004
(51) Int. Cl.: D06M 23/08, D06M 15/657, D06M 13/517, C08K 9/04

(54) **VERWENDUNG VON MIT FLUORSILANEN HYDROPHOBIERTEN PARTIKELN ZUR HERSTELLUNG VON SELBSTREINIGENDEN OBERFLÄCHEN MIT LIPOPHOBEN, OLEOPHOBEN, LAKTOPHOBEN UND HYDROPHOBEN EIGENSCHAFTEN**
USE OF PARTICLES HYDROPHOBIZED BY FLUOROSILANES FOR THE PRODUCTION OF SELF-CLEANING SURFACES HAVING LIPOPHOBIC, OLEOPHOBIC, LACTOPHOBIC AND HYDROPHOBIC PROPERTIES
UTILISATION DE PARTICULES RENDUES HYDROPHOBES PAR DES FLUOROSILANES POUR FABRIQUER DES SURFACES AUTONETTOYANTES A PROPRIETES LIPOPHOBES, OLEOPHOBES, LACTOPHOBES ET HYDROPHOBES

(30) Priorität: 15.05.2003 DE 10321851
(43) Veröffentlichungstag der Anmeldung: 08.02.2006
(73) Patentinhaber: Evonik Degussa GmbH, 45128 Essen (DE)
(72) Erfinder: OLES, Markus, 45525 Hattingen (DE); NUN, Edwin, 48727 Billerbeck (DE)
(86) Internationale Anmeldenummer: PCT/EP2004/050577
(87) Internationale Veröffentlichungsnummer: WO 2004/101880

(56) Entgegenhaltungen:
- EP-A- 0 846 715
- DE-A- 3 913 485
- DATABASE WPI Section Ch, Week 199433 Derwent Publications Ltd., London, GB; Class A17, AN 1994-269563 XP002294158 & JP 06 200074 A (MATSUSHITA DENKI SANGYO KK) 19. Juli 1994 (1994-07-19)

## Beschreibung

Die Erfindung betrifft die Verwendung von mit Fluorsilanen hydrophobierten Partikeln zur Herstellung von selbstreinigende Oberflächen mit lipophoben, oleophoben, laktophoben und hydrophoben Eigenschaften sowie Gegenstände mit solchen Oberflächen.

Wasserabweisende, also hydrophobe Oberflächen sind seit langem bekannt. Insbesondere feine Silicapartikel lassen sich mit Perfluoroctylethyltrichlorsilanen funktionalisieren und können anschliessend in einem UV-härtbarem Lack suspendiert werden (JP 09-220518). Die Aushärtung dieser Matrix führt zu Beschichtungen, welche PMMA verstärkt wasserabweisende Eigenschaften verleiht.

Eine Weiterentwicklung der wasserabweisenden Oberflächen sind selbstreinigende Oberflächen, die durch bewegtes Wasser von Verunreinigungen gereinigt werden können. Die Herstellung solcher Oberflächen wurde mehrfach vorbeschrieben. Das Wassertropfen auf hydrophoben Oberflächen besonders dann, wenn diese strukturiert sind, abrollen, allerdings ohne Selbstreinigung zu erkennen, wurde bereits 1982 von A.A. Abramson in Chimia i Shisn russ.11, 38, beschrieben. Für selbstreinigende Oberflächen ist neben einer geeigneten Struktur auch eine Spezielle Oberflächenchemie erforderlich. Eine geeignete Kombination aus Struktur und Hydrophobie macht es möglich, dass schon geringe Mengen bewegten Wassers auf der Oberfläche haftende Schmutzpartikel mitnehmen und die Oberfläche reinigen (WO 96/04123; US 3354022, C. Neinhuis, W. Barthlott, Annals of Botany 79, (1997), 667). Diese Kombination aus Struktur und Chemie kann beispielsweise über ein Prägeverfahren in einem hydrophoben Lack erzielt werden. Ebenso sind auch Spritzgussverfahren und Heißprägeverfahren möglich.

Stand der Technik bezüglich selbstreinigender Oberflächen ist, gemäß EP 0 933 388, dass für solche selbstreinigenden Oberflächen ein Aspektverhältnis von > 1 und eine Oberflächenenergie von kleiner 20 mN/m erforderlich ist. Das Aspektverhältnis ist hierbei definiert als der Quotient von mittlerer Höhe zur mittleren Breite der Struktur. Vorgenannte Kriterien sind in der Natur, beispielsweise im Lotusblatt, realisiert. Die aus einem hydrophoben, wachsartigen Material gebildete Oberfläche einer Pflanze weist en auf, die bis zu einigen µm voneinander entfernt sind. Wassertropfen kommen im Wesentlichen nur mit den Spitzen der Erhebungen in Berührung. Solche wasserabstoßenden Oberflächen werden in der Literatur vielfach beschrieben. Ein Beispiel dafür ist ein Artikel in Langmuir 2000, 16, 5754, von Masashi Miwa et al, der beschreibt, dass Kontaktwinkel und Abrollwinkel mit zunehmender Strukturierung künstlicher Oberflächen, gebildet aus Böhmit, aufgetragen auf eine spingecoatete Lackschicht und anschließend kalziniert, zunehmen.

Neben diesem Abformen von Strukturen durch geeignete Werkzeuge sind auch partikuläre Systeme entwickelt worden. Die Herstellung von Strukturen zur Selbstreinigung durch Aufbringen von Partikeln auf eine Oberfläche wurde erstmals in JP 07-328532 beschrieben. Dabei wurden hydrophobe Kieselsäurefeinteilchen mit einem Harzfilm an einer Oberfläche fixiert. Die Schweizer Patentschrift CH-PS 268258 beschreibt ein Verfahren, bei dem durch Aufbringen von Pulvern, wie Kaolin, Talkum, Ton oder Silicagel, strukturierte Oberflächen erzeugt werden. Die Pulver werden durch Öle und Harze auf Basis von Organosilizium-Verbindungen auf der Oberfläche fixiert. In neuerer Zeit wurden partikuläre Systeme entwickelt, die auf Nanoteilchen mit einer sehr hydrophoben Oberfläche basieren, wie z. B. in DE 10129116, DE 10138036 und DE 10134477 beschrieben. Die Anbindung der Nanoteilchen an das Substrat erfolgt entweder
a) durch eine Trägerschicht oder
b) durch eine direkte Einlagerung der Partikel ins Polymer/Substrat.

In den zuletzt genannten Dokumenten wird die Verwendung von verschiedenen hydrophoben Partikeln zur Erzeugung von hydrophoben, selbstreinigenden Oberflächen beschrieben, welche im Wesentlichen wasserabweisende Eigenschaften aufweisen. So kommt es, dass zwar viele Schmutzsorten nicht an solchen Oberflächen haften bleiben bzw. durch bewegtes Wasser wieder abgewaschen werden können, aber ein fett- oder ölhaltiger, insbesondere flüssiger Schmutz, wie z. B. der berühmte "Soßenfleck" oder "Fettfleck" stellt immer noch ein Problem dar, da ein solcher Schmutz auf Grund seiner geringen Hydrophilie an der mit hydrophoben Partikeln ausgerüsteten Oberfläche anhaften kann.

Aufgabe der vorliegenden Erfindung war es deshalb eine Möglichkeit bereitzustellen, Oberflächen so auszurüsten, dass diese nicht nur wasserabweisende und selbstreinigende Eigenschaften aufweisen sondern auch unempfindlich gegen öl- oder fetthaltige Verschmutzungen sind.

Überraschenderweise wurde gefunden, dass durch die Verwendung von Partikeln, die mit Fluorsilanen hydrophobiert wurden, zur Herstellung von Oberflächen mit selbstreinigenden Eigenschaften Oberflächen erhalten werden konnten, die nicht nur hydrophobe sondern auch laktophobe, oleophobe und lipophobe Eigenschaften aufweisen.

Gegenstand der vorliegenden Erfindung ist deshalb die Verwendung von Partikeln, die mit Fluorsilanen hydrophobiert wurden, zur Herstellung von Oberflächen mit selbstreinigenden Eigenschaften, die eine Oberflächenstruktur mit Erhebungen aufweisen, die durch die Mikropartikel gebildet wird, wobei die hergestellten Oberflächen neben selbstreinigenden Eigenschaften oleophobe, lipophobe und laktophobe Eigenschaften aufweisen, welche dadurch gekennzeichnet sind, dass die durch die Mikropartikel gebildete Oberflächenstruktur Erhebungen mit einer mittleren Höhe von 20 nm bis 25 µm und einen mittleren Abstand von 20 nm bis 25 µm aufweist, wobei die Mikropartikel einen Partikeldurchmesser von 0,02 bis 100 µm aufweisen und mit Fluoralkylalkoxysilanen hydrophobiert sind.

Ebenso sind Gegenstand der vorliegenden Erfindung Gegenstände mit zumindest einer Oberfläche mit selbstreinigenden, hydrophoben, lipophoben, oleophoben und laktophoben Eigenschaften, hergestellt durch die erfindungsgemäße Verwendung von mit Fluorsilanen hydrophobierten Mikropartikeln, wobei die Gegenstände z. B. eine Textilie, ein Werbeträger, ein Markisenstoff, eine Abdeckfolie, ein technisches Vlies, ein Bekleidungsstück, eine Outdoorkleidung, eine Regenkleidung, eine Arbeitskleidung, eine Kinderbekleidung, eine Schutzkleidung, ein Halbzeug, eine Folie oder ein Gegenstand aus Kunststoff sein können.

Die Verwendung von mit Fluorsilanen hydrophobierten Partikeln zur Herstellung von Oberflächen hat den Vorteil, dass so hergestellt Oberflächen nicht nur hydrophobe, sondern auch lipophobe, oleophobe und laktophobe Eigenschaften aufweisen. Durch diese Eigenschaften wird erreicht, dass auch öl- oder fetthaltige Schmutzpartikel und insbesondere öl- oder fetthaltige flüssige Verschmutzungen von den Oberflächen einfach wieder entfernt werden können. So perlen z. B. Milch- oder Soßenflecken einfach von den Oberflächen ab, ohne dass Tenside oder Fettlöser eingesetzt werden müssen. Besonders interessant sind diese Eigenschaften von Oberflächen für die Oberflächen von Textilien. Besonders vorteilhaft ist deshalb die Verwendung von mit Fluorsilanen behandelten Partikeln zur Herstellung von Arbeitskleidung, Tischtextilien oder Baby- bzw. Kinderbekleidung, da diese Textilien besonders häufig mit fett- oder ölhaltigen, häufig auch flüssigen Verschmutzungen in Kontakt kommen.

Die Erfindung wird nachfolgend beispielhaft beschrieben, ohne auf diese Ausführungsformen beschränkt zu sein.

Die erfindungsgemäße Verwendung von mit Fluoralkylsilanen hydrophobierten Mikropartikeln zur Herstellung von Oberflächen mit selbstreinigenden Eigenschaften, die eine Oberflächenstruktur mit Erhebungen aufweisen, die durch die Mikropartikel gebildet wird, zeichnet sich dadurch aus, dass die hergestellten Oberflächen neben selbstreinigenden Eigenschaften oleophobe, lipophobe und laktophobe Eigenschaften aufweisen.

Die durch die Mikropartikel gebildete Oberflächenstruktur mit selbstreinigenden Eigenschaften weist Erhebungen mit einer mittleren Höhe von 20 nm bis 25 µm und einem mittleren Abstand von 20 nm bis 25 µm auf, vorzugsweise mit einer mittleren Höhe von 50 nm bis 10 µm und/oder einem mittleren Abstand von 50 nm bis 10 µm und besonders bevorzugt mit einer mittleren Höhe von 50 nm bis 4 µm und/oder einen mittleren Abstand von 50 nm bis 4 µm auf. Ganz besonders bevorzugt weisen die erfindungsgemäßen Flächenextrudate Oberflächen Erhebungen mit einer mittleren Höhe von 0,25 bis 1 µm und einem mittleren Abstand von 0,25 bis 1 µm auf. Unter dem mittleren Abstand der Erhebungen wird im Sinne der vorliegenden Erfindung der Abstand der höchsten Erhebung einer Erhebung zur nächsten höchsten Erhebung verstanden. Hat eine Erhebung die Form eines Kegels so stellt die Spitze des Kegels die höchste Erhebung der Erhebung dar. Handelt es sich bei der Erhebung um einen Quader, so stellte die oberste Fläche des Quaders die höchste Erhebung der Erhebung dar.

Die selbstreinigenden Eigenschaften sind zurückzuführen auf die Benetzungseigenschaften welche sich durch den Randwinkel, den ein Wassertropfen mit einer Oberfläche bildet, beschreiben. Ein Randwinkel von 0 Grad bedeutet dabei eine vollständige Benetzung der Oberfläche. Die Messung des statischen Randwinkels erfolgt in der Regel mittels Geräten, bei denen der Randwinkel optisch bestimmt wird. Auf glatten hydrophoben Oberflächen werden üblicherweise statische Randwinkel von kleiner 125° gemessen. Die vorliegenden selbstreinigenden Oberflächen weisen statische Randwinkel von vorzugsweise größer 130° auf, bevorzugt größer 140° und ganz besonders bevorzugt größer 145° auf. Es wurde außerdem gefunden, dass eine Oberfläche nur dann gute selbstreinigende Eigenschaften aufweist, wenn diese eine Differenz zwischen Fortschreit- und Rückzugswinkel von maximal 10 ° aufweist, weshalb erfindungsgemäße Oberflächen vorzugsweise eine Differenz zwischen Fortschreit- und Rückzugswinkel von kleiner 10°, vorzugsweise kleiner 5° und ganz besonders bevorzugt kleiner 4° aufweisen. Für die Bestimmung des Fortschreitwinkels wird ein Wassertropfen mittels einer Kanüle auf die Oberfläche gesetzt und durch Zugabe von Wasser durch die Kanüle der Tropfen auf der Oberfläche vergrößert. Während der Vergrößerung gleitet der Rand des Tropfens über die Oberfläche und der Kontaktwinkel wird Fortschreitwinkel bestimmt. Der Rückzugswinkel wird an dem selben Tropfen gemessen, nur wird durch die Kanüle dem Tropfen Wasser entzogen und während des Verkleinerns des Tropfens der Kontaktwinkel gemessen. Der Unterschied zwischen beiden Winkeln wird als Hysterese bezeichnet. Je kleiner der Unterschied ist, desto geringer ist die Wechselwirkung des Wassertropfens mit der Oberfläche der Unterlage und desto besser ist der Lotus-Effekt (die selbstreinigende Eigenschaft).

Die erfindungsgemäßen Oberflächen, die eine Oberflächenstruktur mit selbstreinigenden Eigenschaften aufweist, weist bevorzugt ein Aspektverhältnis der Erhebungen von größer 0,15 auf. Vorzugsweise weisen die Erhebungen, die durch die Partikel selbst gebildet werden, ein Aspektverhältnis von 0,3 bis 1 auf, besonders bevorzugt von 0,5 bis 0,8 auf, wobei Aspektverhältnisse von kleiner 1 nur dann bevorzugt sind, wenn die Partikel zumindest teilweise in die Oberfläche eindringen. Das Aspektverhältnis ist dabei definiert als der Quotient von maximaler Höhe zur maximalen Breite der Struktur der Erhebungen.

Die erfindungsgemäße Oberfläche kann durch fest mit der Oberfläche verbundenen Mikropartikeln, also z. B. zumindest teilweise in der Oberfläche verankerten Mikropartikeln, oder durch Mikroartikel, die auf der Oberfläche aufliegen und nur durch vergleichsweise schwache physikalische Kräfte mit dieser verbunden sind, also nicht permanent mit der Oberfläche verbundenen Mikropartikeln, gebildet werden

Die die Erhebungen bildenden Mikropartikel, die mit Fluorsilanen hydrophobiert wurden, können z. B. ausgewählt sein aus Mikropartikeln von Silikaten, Mineralien, Metalloxiden, Metallpulvern, Kieselsäuren, Pigmenten oder Polymeren. Besonders bevorzugt sind die Mikropartikel ausgewählt aus pyrogenen Kieselsäuren, Fällungskieselsäuren oder Aluminiumoxid. Ganz besonders bevorzugt weisen die Mikropartikel pyrogene Kieselsäuren auf, insbesondere solche, wie sie z. B. unter dem Handelsnamen Aerosil® VPR 411 von der Degussa AG erhältlich sind.

Die Mikropartikel weisen einen Partikeldurchmesser von 0,02 bis 100 µm auf, bevorzugt von 0,1 bis 50 µm und besonders bevorzugt von 0,1 bis 30 µm. Geeignete Mikropartikel können aber auch einen Durchmesser von kleiner als 500 nm aufweisen oder sich aus Primärteilchen zu Agglomeraten oder Aggregaten mit einer Größe von 0,2 bis 100 µm zusammenlagern.

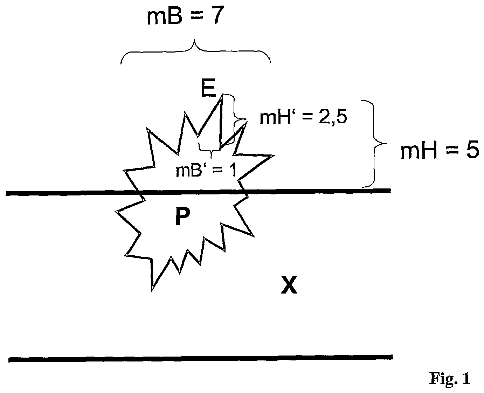

Besonders bevorzugte Mikropartikel, welche die Erhebungen der strukturierten Oberfläche bilden, sind solche, die eine unregelmäßige Feinstruktur im Nanometerbereich auf der Oberfläche aufweisen. Dabei weisen die Mikropartikel mit der unregelmäßigen Feinstruktur vorzugsweise Erhebungen bzw. Feinstrukturen mit einem Aspektverhältnis von größer 1, besonders bevorzugt größer 1,5 auf. Das Aspektverhältnis ist wiederum definiert als Quotient aus maximaler Höhe zu maximaler Breite der Erhebung. In Fig. 1 wird der Unterschied der Erhebungen, die durch die Partikel gebildet werden und die Erhebungen, die durch die Feinstruktur gebildet werden schematisch verdeutlicht. Die Figur Fig. 1 zeigt die Oberfläche eines Flächenextrudates **X,** die Partikel **P** aufweist (Zur Vereinfachung der Darstellung ist nur ein Partikel abgebildet). Die Erhebung, die durch den Partikel selbst gebildet wird, weist ein Aspektverhältnis von ca. 0,71 auf, berechnet als Quotient aus der maximalen Höhe des Partikels **mH,** die 5 beträgt, da nur der Teil des Partikels einen Beitrag zur Erhebung leistet, der aus der Oberfläche **X** herausragt, und der maximalen Breite **mB,** die im Verhältnis dazu 7 beträgt. Eine ausgewählte Erhebung der Erhebungen **E,** die durch die Feinstruktur der Partikel auf den Partikeln vorhanden sind, weist ein Aspektverhältnis von 2,5 auf, berechnet als Quotient aus der maximalen Höhe der Erhebung **mH'**, die 2,5 beträgt und der maximalen Breite **mB'**, die im Verhältnis dazu 1 beträgt.

Es kann vorteilhaft sein, wenn die Mikropartikel oder die gesamte Oberfläche nach dem Aufbringen der Mikropartikel auf die Oberfläche erneut mit Fluorsilanen hydrophobiert werden.

Zur Hydrophobierung der Partikel vor oder nach dem Aufbringen auf die Oberfläche können diese mit einer zur Hydrophobierung geeigneten Verbindung, ausgewählt z. B. aus der Gruppe der Fluoralkylsilane oder Fluoralkylsiloxane behandelt werden. Die Hydrophobierung erfolgt dabei bevorzugt durch Vernetzen des Hydrophobierungsmittels auf der Partikeloberfläche oder durch Anbinden des Hydrophobierungsmittels an die Partikeloberfläche. Die Silane oder Siloxane weisen zu diesem Zweck vorzugsweise eine oder mehrere Alkoxygruppen, wie z. B. Ethoxy- oder Methoxygruppen auf, die mit den auf der Oberfläche der Partikel vorhandenen Silanol-Gruppen reagieren und unter Abspaltung des entsprechenden Alkohols eine feste chemische Bindung ausbilden. Besonders bevorzugte Hydrophobierungsmittel sind Tridecafluoroctyltriethoxysilan und Oligomere davon wie z. B.
DYNASYLAN TM F 8261 Tridecafluor-1,1,2,2-tetrahydrooctyl-1-triethoxysilan DYNASYLAN TM F 8850 3,3,4,4,5,5,6,6,7,7,8,8,8-Tridecafluroroctyltriethoxyoligosiloxan, hergestellt durch HCl-katalysierte Kondensation von 3,3,4,4,5,5,6,6,7,7,8,8,8-Tridecaflurooctyltriethoxysilan mit 0,8 Mol/Mol H2O (Dimere, Trimere, Tetramere), 50 Gew.-%ig in Ethanol
DYNASYLAN TM F 8262 alkoholische Lösung von aktiviertem fluoralkylfunktionellem Organosilan analog Beispiel C / 5a, DE 199 04 132 bzw. EP 1 033 395 (Jenkner et al., Degussa-Hüls AG). Für DYNASYLAN TM F 8262 wird anstelle von i-Propanol Ethanol eingesetzt. Zusammensetzung: 1,0 Gew.-% 3,3,4,4,5,5,6,6,7,7,8,8,8-Tridecafluoroctyltriethoxysilan, 0,126 Gew.-% H2O, 0,074 Gew.-% HCI (absolut), 0,1 Gew.-% SnCl2x2H2O, 98,7 Gew.-% Ethanol.
DYNASYLAN TM F 8810 10 Gew.-%ige wasserhaltige Lösung eines oligomerisierten Cokondensats aus 3,3,4,4,5,5,6,6,7,7,8,8,8-Tridecafluoroctyltriethoxysilan und 3-Aminopropyltriethoxysilan analog Beispiel H2, DE 198 23 390 (Standke et al., Degussa-Hüls AG).

Die mit Fluorsilanen hydrophobierten Mikropartikel können in allen bekannten Verfahren zur Herstellung von Oberflächen mit selbstreinigenden Eigenschaften, die eine Oberflächenstruktur mit Erhebungen aufweisen, die durch die Mikropartikel gebildet wird, eingesetzt werden unter der Voraussetzung, dass bei diesen Verfahren keine Bedingungen (Temperatur, Lösemittel etc.) angewendet werden, bei denen die Mikropartikel selbst oder die Hydrophobierungsschicht geschädigt oder zerstört werden.

Bevorzugt ist die Verwendung der mit Fluorsilanen hydrophobierten Mikropartikel in Verfahren bei denen die Mikropartikel trocken, z. B. durch Aufsprühen oder Aufpudern vorzugsweise durch Aufsprühen mittels einer elektrostatischen Sprühpistole auf eine Oberfläche aufgetragen wird und auf dieser fixiert wird. Verfahren bei denen die Fixierung mittels Trägersystemen erfolgt sind bekannt. So wird in DE 101 18 345 und DE 101 18 352 beschrieben, dass die Mikropartikel auf eine Oberfläche, die gegebenenfalls mit einer Trägerschicht versehen wurde, aufgesprüht oder aufgestreut werden und anschließend mit mittels des Trägersystems oder physikalisch, z. B. durch Eindrücken in die Oberfläche mit der Oberfläche fixiert werden. Das Eindrücken kann z. B. während eines herkömmlichen Verfahrensschrittes in einem Formgebungsverfahren, z. B. Spritzgießen, Kalandrieren, Formblasen etc. erfolgen, wobei vorzugsweise die Mikropartikel in die Oberfläche eines noch nicht erstarrten Körpers eingedrückt werden. In DE 101 18 351 wird eine selbstreinigende Oberfläche durch Vermischen von Mikropartikeln (Aerosil VPR 411) mit Fixiermittelpartikeln und anschließendem Aufbringen und Fixieren dieser Mischung auf einer Oberfläche hergestellt. Das Aufbringen erfolgt dabei vorzugsweise mit einer (elektrostatischen) Sprühpistole. Ebenfalls können mit Fluorsilanen hydrophobierten Mikropartikel erfindungsgemäß in Verfahren eingesetzte werden, bei denen die Mikropartikel als Dispersion, z. B. durch Aufsprühen einer Dispersion von Mikropartikeln in einem Lösemittel, welches weder den Mikropartikel noch das Fluorsilan angreift oder Tauchen eines Gegenstandes in eine solche Dispersion, auf eine Oberfläche aufgetragen wird und dort fixiert wird. Das Fixieren kann dabei auf unterschiedliche Arten erfolgen. Als Beispiele seien hier nur einige Verfahren genannt, deren Details den entsprechenden Schriften entnommen werden können. So werden in DE 101 18 346 und DE 101 18 348 Suspensionen von Mikropartikeln in einem Lösemittel auf Fasern bzw. Textilien aufgetragen und durch Verdampfen des Lösemittels fixiert. Das Lösemittel ist dabei so gewählt, dass es das Fasermaterial anlöst. In DE 101 18 349 wird ein entsprechendes Verfahren allgemein für Oberflächen beschrieben. Neben Lösemitteln, die die Oberfläche anlösen bzw. angreifen können auch solche eingesetzt werden, die die Oberfläche nur anquellen. Nach dem Entfernen des Lösemittels wird die Quellung rückgängig gemacht, wobei Mikropartikel teilweise an der Oberfläche fixiert werden. Für temporäre Beschichtungen ist es auch möglich Dispersionen von Lösemitteln und Mikropartikeln auf Oberflächen aufzubringen, bei denen das Lösemittel keinerlei Wechselwirkung mit dem Material der Oberfläche zeigt. Bei solchen Verfahren erfolgt das Fixieren der Mikropartikel nach dem Verdampfen des Lösemittels mittels schwacher Wechselwirkungen, wie z. B. van-der-Waals-Kräfte. Weitere Verfahren, bei denen die mit Fluorsilanen hydrophobierten Mikropartikel verwendet werden können, sind möglich und ergeben sich dem Fachmann in naheliegender Weise.

Um bei den Verfahren, bei denen die Mikropartikel in eine Oberfläche eingedrückt werden, die genannten Aspektverhältnisse der Erhebungen zu erzielen ist es vorteilhaft, wenn zumindest ein Teil der Partikel, vorzugsweise mehr als 50 % der Partikel nur bis zu 90 % ihres Durchmessers in die Oberfläche eingebettet sind. Die Oberfläche weist deshalb bevorzugt Partikel auf, die mit 10 bis 90 %, bevorzugt 20 bis 50 % und ganz besonders bevorzugt von 30 bis 40 % ihres mittleren Partikeldurchmessers in der Oberfläche verankert sind und damit mit Teilen ihrer inhärent zerklüfteten Oberfläche noch aus der Oberfläche herausragen. Auf diese Weise ist gewährleistet, dass die Erhebungen, die durch die Partikel selbst gebildet werden, ein genügend großes Aspektverhältnis von vorzugsweise zumindest 0,15 aufweisen. Auf diese Weise wird außerdem erreicht, dass die fest verbundenen Partikel sehr haltbar mit der Oberfläche verbunden sind. Das Aspekt-Verhältnis ist hierbei definiert als das Verhältnis von maximaler Höhe zu maximaler Breite der Erhebungen. Ein als ideal kugelförmiger angenommener Partikel, der zu 70 % aus einer Oberfläche herausragt, weist gemäß dieser Definition ein Aspektverhältnis von 0,7 auf.

Die Oberflächen, die mit dem Verfahrne hergestellt werden können, können z. B. die Oberflächen von Textilien, Werbeträgern, Markisenstoffen, Abdeckfolien, technischen Vliesen, Bekleidungsstücken, Outdoorkleidung, Regenkleidung, Arbeitskleidung, Kinderbekleidung, Schutzkleidung, Halbzeugen, Folien oder Gegenständen aus Kunststoff sein.

Durch die Verwendung von mit Fluorsilanen hydrophobierten Mikropartikeln in entsprechenden Verfahren können Gegenstände mit zumindest einer Oberfläche mit selbstreinigenden, hydrophoben, lipophoben, oleophoben und laktophoben Eigenschaften, hergestellt werden. Diese Gegenstände können z. B. eine Textilie, ein Werbeträger, ein Markisenstoffe, eine Abdeckfolie, ein technisches Vlies, ein Bekleidungsstück, eine Outdoorkleidung, eine Regenkleidung, eine Arbeitskleidung, eine Kinderbekleidung, eine Schutzkleidung, ein Halbzeug, eine Folie oder ein Gegenstand aus Kunststoff sein.

Das erfindungsgemäße Verfahren wird an Hand des nachfolgenden Beispiels beschrieben, ohne dass die Erfindung auf dieses Ausführungsbeispiel beschränkt sein soll.

### Beispiel 1:

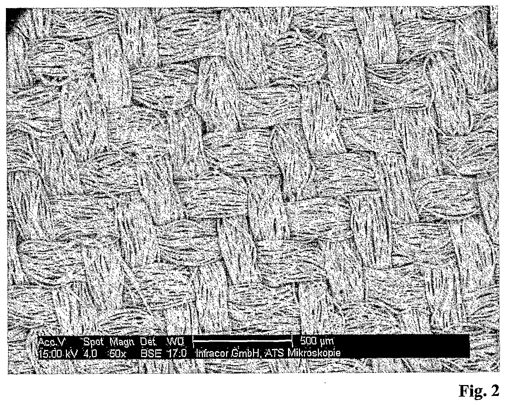

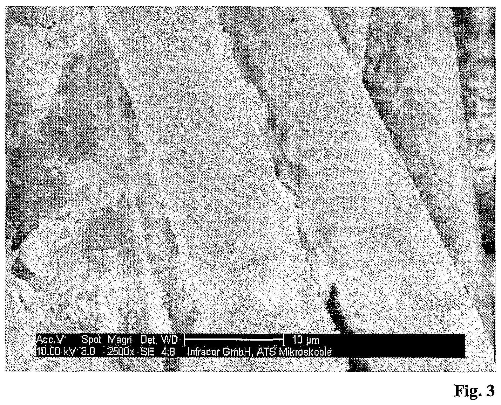

Ein handelsübliches Polyestergewebe (PET, weiss, erworben bei Karstadt, Bochum) mit einem Faserdurchmesser von 10 µm wird in eine Dispersion mit einem Teil Ethanol, 10 Gew.-% Aerosil VPR 411 (bezogen auf das Ethanol) und 9 Gewichtsteilen Toluol getaucht. Nach 5 Sekunden wird die Textilie wieder aus dem Bad herausgezogen und bei Raumtemperatur getrocknet und anschließend 1 h bei 80 ° getempert. Anschließend wurden die Eigenschaften der Textilie charakterisiert. Ein Wassertropfen (60 µl) rollt bei einem Winkel von 21° zur Horizontalen selbständig von der Oberfläche ab. Eine Verschmutzung mit Tonerstaub (Printex 50, Degussa AG Düsseldorf) konnte mit Wasser vollständig entfernt werden. Silicon-Öl perlte im Vergleich zu einem nicht ausgerüsteten Gewebe selbständig bei einem Neigungswinkel zur Horizontalen von ca. 40° ab. Handelsübliche H-Milch (ultrahocherhitzte, homogenisierte und pasteurisierte Milch, Milsani, ALDI) mit einem Fettgehalt von 1,5 % perlte ebenfalls bei einem Neigungswinkel von ca. 40° ab. Der Wasserdurchtritt durch die so ausgerüstete Textilie erfolgte als die aufgebaute Wassersäule eine Höhe von 3 cm überschritt (gemessen nach DIN EN13562). Eine nicht ausgerüstetes Vergleichsmuster benetzte sofort und es konnte keine Wassersäule aufgebaut werden. Die Figuren Fig. 1 und Fig. 2 zeigen REM-Bilder mit unterschiedlicher Vergrößerung der im Beispiel 1 gefertigten Textilie.

## Patentansprüche

1. Verwendung von mit Fluorsilanen hydrophobierten Mikropartikeln zur Herstellung von Oberflächen mit selbstreinigenden Eigenschaften, die eine Oberflächenstruktur mit Erhebungen aufweisen, die durch die Mikropartikel gebildet wird, wobei die hergestellten Oberflächen neben selbstreinigenden Eigenschaften oleophobe, lipophobe und laktophobe Eigenschaften aufweisen,
**dadurch gekennzeichnet,**
**dass** die durch die Mikropartikel gebildete Oberflächenstruktur Erhebungen mit einer mittleren Höhe von 20 nm bis 25 µm und einen mittleren Abstand von 20 nm bis 25 µm aufweist, wobei die Mikropartikel einen Partikeldurchmesser von 0,02 bis 100 µm aufweisen und mit Fluoralkylalkoxysilanen hydrophobiert sind.

2. Verwendung nach Anspruch 1,
**dadurch gekennzeichnet,**
**dass** die Mikropartikel mit Fluoralkylalkoxysilanen hydrophobierte pyrogene Kieselsäure- oder Fällungskieselsäurepartikel sind.

3. Verwendung nach Anspruch 1 oder 2,
**dadurch gekennzeichnet,**
**dass** die Oberflächen die Oberflächen von Textilien, Werbeträgern, Markisenstoffen, Abdeckfolien, technischen Vliesen, Bekleidungsstücken, Outdoorkleidung, Regenkleidung, Arbeitskleidung, Kinderbekleidung, Schutzkleidung, Halbzeugen, Folien oder Gegenständen aus Kunststoff sind.

4. Gegenstände mit zumindest einer Oberfläche mit selbstreinigenden, hydrophoben, lipophoben, oleophoben und laktophoben Eigenschaften,
**dadurch gekennzeichnet,**
**dass** diese mit den hydrophobierten Mikropartikeln der Ansprüche 1 bis 3 beschichtet sind.

5. Gegenstand nach Anspruch 4,
**dadurch gekennzeichnet,**
**dass** der Gegenstand eine Textilie, ein Werbeträger, ein Markisenstoff, eine Abdeckfolie, ein technisches Vlies, ein Bekleidungsstück, eine Outdoorkleidung, eine Regenkleidung, eine Arbeitskleidung, eine Kinderbekleidung, eine Schutzkleidung, ein Halbzeug, eine Folie oder ein Gegenstand aus Kunststoff ist.

## Claims

1. Use of microparticles hydrophobized with fluorosilanes for producing surfaces which have self-cleaning properties and a surface structure with elevations which are formed by the microparticles, the surfaces produced having not only self-cleaning properties but also oleophobic, lipophobic and lactophobic properties,
**characterized in that**
the surface structure formed by the microparticles has elevations with a mean height of from 20 nm to 25 µm and a mean separation of from 20 nm to 25 µm, the microparticles having a particle diameter of from 0.02 to 100 µm and having been hydrophobized with fluoroalkylalkoxysilanes.

2. Use according to Claim 1,
**characterized in that**
the microparticles are pyrogenic silica or precipitated silica particles hydrophobized with fluoroalkylalkoxysilanes.

3. Use according to one of Claims 1 and 2,
**characterized in that**
the surfaces are the surfaces of textiles, advertising media, awning materials, covering films, industrial nonwovens, items of clothing, outdoor clothing, rainwear, workwear, children's clothing, protective clothing, semifinished products, films or articles made of plastic.

4. Articles with at least one surface with self-cleaning, hydrophobic, lipophobic, oleophobic and lactophobic properties,
**characterized in that**
they have been coated with the hydrophobized microparticles of Claims 1 to 3.

5. Article according to Claim 4,
**characterized in that** the article is a textile, an advertising medium, an awning material, a covering film, an industrial nonwoven, an item of clothing, outdoor clothing, rainwear, workwear, children's clothing, protective clothing, a semifinished product, a film or an article made of plastic.

## Revendications

1. Utilisation de microparticules hydrophobées avec des fluorosilanes pour la fabrication de surfaces à propriétés autonettoyantes, qui comprennent une structure de surface présentant des élévations, qui est formée par les microparticules, les surfaces fabriquées présentant en plus des propriétés autonettoyantes des propriétés oléophobes, lipophobes et lactophobes, **caractérisée en ce que**
la structure de surface formée par les microparticules présente des élévations d'une hauteur moyenne de 20 nm à 25 µm et d'un écart moyen de 20 nm à 25 µm, les microparticules présentant un diamètre de particule de 0,02 à 100 µm, et étant hydrophobées avec des fluoroalkylalcoxysilanes.

2. Utilisation selon la revendication 1, **caractérisée en ce que** les microparticules sont des particules de silice pyrogénée ou de silice précipitée hydrophobées avec des fluoroalkylalcoxysilanes.

3. Utilisation selon la revendication 1 ou 2, **caractérisée en ce que** les surfaces sont des surfaces de textiles, de supports publicitaires, de toiles de marquises, de bâches, de non-tissés techniques, de vêtements, de vêtements de plein air, de vêtements pour la pluie, de vêtements de travail, de vêtements pour enfants, de vêtements de protection, de semi-finis, de films ou d'articles en plastique.

4. Articles comprenant au moins une surface ayant des propriétés autonettoyantes, hydrophobes, lipophobes, oléophobes et lactophobes, **caractérisés en ce que** ceux-ci sont revêtus avec les microparticules hydrophobées selon les revendications 1 à 3.

5. Article selon la revendication 4, **caractérisé en ce que** l'article est un textile, un support publicitaire, une toile de marquise, une bâche, un non-tissé technique, un vêtement, un vêtement de plein air, un vêtement pour la pluie, un vêtement de travail, un vêtement pour enfant, un vêtement de protection, un semi-fini, un film ou un article en plastique.
